# EUROPEAN PATENT APPLICATION

(11) **EP 1 659 013 A1**
(43) Date of publication of application: **24.05.2006**
(21) Application number: 04105957.7
(22) Date of filing: 22.11.2004
(51) Int. Cl.: B60J 7/02

(54) **Slide shoe and sunshade assembly provided therewith**

(71) Applicant: Inalfa Roof Systems Group B.V., 5804 AH Venray (NL)
(72) Inventor: Gunther, Lauret, 5704 GS, Helmond (NL)
(74) Representative: Voncken, Bartholomeus Maria Ch.

(57) **Abstract**

A slide shoe is presented having at least two opposite slide faces for cooperation with two corresponding slide surfaces of a guide. At least one of said slide faces is provided with a wedge-shaped recess with a depth that increases/decreases in a direction aligned with the intended direction of movement of the slide shoe in the guide, wherein in the recess a wedge-shaped brake insert is positioned with a dimension in said direction of movement that is smaller than the corresponding dimension of the recess, such that the brake insert is movable in said recess in a direction aligned with said direction of movement of the slide shoe in the guide.

## Description

Firstly, the invention relates to a slide shoe having at least two opposite slide faces for cooperation with two corresponding slide surfaces of a guide.

The cooperation between a slide shoe and a guide has to fulfil requirements which, sometimes, are opposite. At one hand, the cooperation between the slide shoe and guide should be of such a kind that an exact positioning of the slide shoe within the guide occurs without undesired movements of the slide shoe and rattling noises resulting therefrom. At the other hand the cooperation between the slide shoe and guide should be of such a kind, that the movement of the slide shoe relative to the guide is not obstructed in an undesired manner. Of course, it would be possible to provide the slide shoe (or, whatever may be the case, the guide) with hand-operated clamping mechanisms which prevent undesired movements of the slide shoe relative to the guide, and thus will prevent disturbing noises. However, the use of such clamping mechanisms requires an additional operation (i.e. unlocking these mechanisms) before the slide shoe can be moved relative to the guide. Thus, such additional clamping mechanisms would render a slide shoe (or slide mechanism comprising such a slide shoe and guide) unnecessary complicated.

It is an object of the present invention to provide an improved slide shoe of the type referred to above.

Thus, in accordance with the present invention a slide shoe is presented having at least two opposite slide faces for cooperation with two corresponding slide surfaces of a guide, characterized in that at least one of said slide faces is provided with a wedge-shaped recess with a depth that increases/decreases in a direction aligned with the intended direction of movement of the slide shoe in the guide, wherein in the recess a wedge-shaped brake insert is positioned with a dimension in said direction of movement that is smaller than the corresponding dimension of the recess, such that the brake insert is movable in said recess in a direction aligned with said direction of movement of the slide shoe in the guide.

In a slide shoe according to the present invention the wedge-shaped brake insert engages a corresponding slide surface of the guide. During movement of the slide shoe relative to the guide friction will occur between the brake insert and said slide surface of the guide. When the slide shoe moves in a first direction, the wedge-shaped brake insert is urged in the direction of decreasing depth of the recess, whereas when the slide shoe moves in the opposite direction relative to the guide the brake insert is urged in the opposite direction of increasing depth of the recess. When the brake insert is moved in the direction of decreasing depth of the recess, the wedge-shape of the recess and of the brake insert will cause the brake insert to project in an increasing amount from the corresponding slide face of the slide shoe, thus engaging the corresponding slide surface of the guide with increasing frictional force. Thus, in such a case the brake insert will have a braking influence on the movement of the slide shoe relative to the guide. However, when the slide shoe moves in the opposite direction and the brake insert is urged in the direction of increasing depth of the recess, the wedge-shape of the recess and brake insert will cause the brake insert to retract in the recess, thus diminishing or even eliminating the braking effect due to friction force between the brake insert and corresponding slide surface of the guide.

The effects mentioned before occur automatically when the slide shoe moves relative to the guide, such that no additional operation is needed.

In a preferred embodiment of the slide shoe according to the present invention the brake insert is preloaded for a movement in the recess in the direction of decreasing depth of the recess. Such a preload can ensure that the braking effect of the brake insert will automatically start when the slide shoe is moved in the corresponding direction relative to the guide. When such a preload is not available, the start of the braking effect of the brake insert in most time will depend on the gravitational force acting on the brake insert and pushing it into engagement with the corresponding slide surface of the guide. In such a case, however, the correct operation of the slide shoe would be dependent on its spatial orientation. When a preload as mentioned before is applied, the operation of the slide shoe will be independent of its spatial orientation.

According to an effective embodiment of the slide shoe, the preload of the brake insert is generated by a spring member positioned between the slide shoe body and the brake insert. However, also other possibilities are conceivable, such as the use of a resilient brake insert.

Further it is preferred, that abutment means are provided for limiting the movement of the brake insert in the recess. As a result the frictional forces acting between the brake insert and guide can be kept within limits.

For example, the abutment means are positioned in such a manner that a movement of the brake insert towards a position for completely blocking the slide shoe in the guide is prevented. Thus a proper operation of the slide shoe will be guaranteed in all cases.

When, in accordance with yet another embodiment of the slide shoe according to the present invention, the abutment means are settable, wear of the wedge-shaped brake insert can be taken care of. As a result, the effective lifespan of the slide shoe can be increased without the need for replacing its brake insert.

Although distinct abutment means could be provided, the constructional features of the slide shoe will be kept at a minimum level when the abutment means are defined by sidewalls of the brake shoe itself and corresponding side walls of the recess.

Further it is preferred that the brake insert is positioned in the recess in a non-removable manner. Non-removable means, that the brake insert cannot fall out of the recess when the slide shoe is removed from the guide. Such a feature will have a positive effect on the ease of mounting a slide shoe.

Such a non-removable position of the brake insert in the recess can, for example, be realised when the recess is provided with undercut grooves housing corresponding projections of the brake insert.

It should be clear, that parts of the brake shoe body defining the undercut groves generally will have to be removed temporarily before the brake insert with its corresponding projections can be positioned in the recess. For such a removability proper means can be provided, such as screws or alike.

Although a slide shoe in accordance with the present invention already operates effectively when it comprises only one brake insert of the type referred to before, it is also possible that both opposite slide faces of the slide shoe are provided with a wedge-shaped recess and wedge-shaped brake insert positioned therein. Whether only one or two brake inserts will be provided depends on the operating forces of the slide shoe.

The invention further relates to a sunshade assembly, comprising a movable shading screen with a leading operating beam, wherein the beam has two outer ends provided with slide shoes cooperating with two guides and wherein the slide shoes are of the type according to the present invention.

Hereinafter the invention will be elucidated while referring to the drawing, in which an embodiment of a sunshade assembly and a slide shoe applied therein, are shown.
Figure 1 shows, schematically, a top plan view of a sunshade assembly incorporating two slide shoes in accordance with the present invention, and
figure 2 shows in side elevational view and on a larger scale an embodiment of a slide shoe according to the present invention.

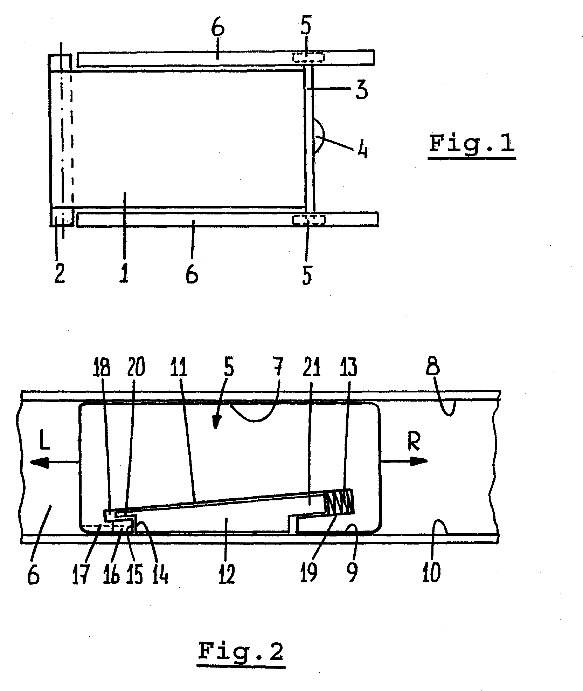

Firstly referring to figure 1, a sunshade assembly basically comprises a moveable shading screen 1 which, in the illustrated embodiment, is windable on and off a winding tube 2. As is known per se, and not shown in detail here , said winding tube 2 may be preloaded in a direction for winding the shading screen thereon.

The end of the shading screen remote from the winding tube 2 is provided with a leading operating beam 3 which, again in the illustrated embodiment, is provided with a grip 4 for manually moving the movable shading screen 1 to and fro.

The operating beam 3 has two outer ends provided with slide shoes 5 which each cooperate with a guide 6. The guides 6 define the track of the shading screen 1 (as is know per se) and also could position the edges of the shading screen (not illustrated here).

A preferred embodiment of a slide shoe 5 is illustrated in figure 2. Slide shoe 5 has an upper slide face 7 for cooperation with an upper slide surface 8 of the guide 6. In a corresponding manner, a lower slide face 9 of the slide shoe 5 is meant for cooperation with a lower slide surface 10 of the guide 6.

In the lower slide face 9 of the slide shoe 5 a wedge-shaped recess 11 is provided. The wedge-shaped recess 11 has a depth that increases or decreases (dependant upon the direction of observation) in a direction aligned with the intended direction of movement of the slide shoe 5 in the guide 6 (in figure 2 to the right/to the left).

In the recess 11 a wedge-shaped brake insert 12 is positioned with a dimension in said direction of movement that is smaller than the corresponding dimension of the recess 11 (i.e. in figure 2 the dimension from the left to the right). The brake insert 12 is movable in said recess 11 in a direction substantially aligned with said direction of movement of the slide shoe 5 in the guide 6 (differing therefrom only with the wedge angle).

A compression spring 13 is positioned between the slide shoe body 5 and the brake insert 12, such that the brake insert 12 is preloaded to the left (as seen in figure 2).

When the slide shoe 5 is moved to the right (arrow R) friction occurring between the lower face of the brake insert 12 and the lower slide surface 10 of the guide 6 will induce a movement of the brake insert 12 to the left relative to the slide shoe body 5. As a result of the wedge shape of the recess 11 and brake insert 12 such a movement of the brake insert 12 also will move its lower surface towards the lower slide surface 10 of the guide 6, thus creating a braking force (or an increase thereof). At the same time the upper face 7 of the slide shoe 5 and upper surface 8 of the guide 6 will engage each other with increasing force.

A movement of the slide shoe 5 in the opposite direction (arrow L) also will induce a frictional force between the lower surface of the brake insert 12 and the lower slide surface 10 of the guide 6, as a result of which the brake insert 12 will move to the right (as seen in figure 2) relative to the slide shoe body 5. Again as a result of the wedge-shape of both elements now the lower surface of the brake insert 12 will move away from the lower slide surface 10 of the guide 6, such that the braking force will be diminished or even eliminated.

A wall portion 14 of the brake insert 12 and a corresponding wall portion 15 of the slide shoe body 5 may cooperate in an abutting manner, such that an end position of the brake insert 12 to the left is defined, in which no complete blocking of the slide shoe 5 in the guide 6 occurs.

In a special embodiment of the slide shoe 5 the wall portion 15 can be part of a settable part 16 of the slide shoe body. This has been illustrated schematically in figure 2 by a dotted line 17 which represents a setting screw or a like. Thus, it is possible to adjust the position of the wall portion 15 (and thus of the brake insert relative to the slide shoe body) to take into account wear of the lower surface of the brake insert 12.

Finally figure 2 shows that the recess 11 comprises undercut grooves 18 and 19 housing corresponding projections 20 and 21 of the brake insert 12. Like this, the brake insert 12 is positioned in the recess 11 in a non-removable manner.

The invention is not limited to the embodiment described before, which may be varied widely within the scope of the invention as defined by the appending claims.

## Claims

1. Slide shoe having at least two opposite slide faces for cooperation with two corresponding slide surfaces of a guide, **characterized in that** at least one of said slide faces is provided with a wedge-shaped recess with a depth that increases/decreases in a direction aligned with the intended direction of movement of the slide shoe in the guide, wherein in the recess a wedge-shaped brake insert is positioned with a dimension in said direction of movement that is smaller than the corresponding dimension of the recess, such that the brake insert is movable in said recess in a direction aligned with said direction of movement of the slide shoe in the guide.

2. Slide shoe according to claim 1, wherein the brake insert is preloaded for a movement in the recess in the direction of decreasing depth of the recess.

3. Slide shoe according to claim 2, wherein the preload of the brake insert is generated by a spring member positioned between the slide shoe body and the brake insert.

4. Slide shoe according to any of the previous claims, wherein abutment means are provided for limiting the movement of the brake insert in the recess.

5. Slide shoe according to claim 4, wherein the abutment means are positioned in such a manner that a movement of the brake insert towards a position for completely blocking the slide shoe in the guide is prevented.

6. Slide shoe according to claim 4 or 5, wherein the abutment means are settable.

7. Slide shoe according to any of the claims 4-6, wherein the abutment means are defined by side walls of the brake shoe itself and corresponding side walls of the recess.

8. Slide shoe according to any of the previous claims, wherein the brake insert is positioned in the recess in a non-removable manner.

9. Slide shoe according to claim 8, wherein the recess is provided with undercut grooves housing corresponding projections of the brake insert.

10. Slide shoe according to any of the previous claims, wherein both opposite slide faces of the slide shoe are provided with a wedge-shaped recess and wedge-shaped brake insert positioned therein.

11. Sunshade assembly, comprising a movable shading screen with a leading operating beam, wherein the beam has two outer ends provided with slide shoes cooperating with two guides and wherein the slide shoes are of the type according to any of the previous claims.
